# EUROPEAN PATENT SPECIFICATION

(11) **EP 2 370 317 B1**
(45) Date of publication and mention of the grant of the patent: **22.10.2014**
(21) Application number: 08876514.4
(22) Date of filing: 17.12.2008
(51) Int. Cl.: B64D 39/00

(54) **AUTOMATICALLY ALLEVIATING FORCES ON A REFUELING BOOM**
VERFAHREN UND SYSTEM ZUR AUTOMATISCHEN KRAFTVERRINGERUNG EINES LUFTBETANKUNGSROHRES
ATTÉNUATION AUTOMATIQUE DES FORCES S'EXERÇANT SUR UNE PERCHE DE RAVITAILLEMENT

(43) Date of publication of application: 05.10.2011
(73) Proprietor: The Boeing Company, Chicago, IL 60606-2016 (US)
(72) Inventor: SPEER, Thomas, E., Des Moines WA 98198 (US); HATCHER, Justin, C., Renton WA 98058 (US); MUSGRAVE, Jeffrey, L., Renton WA 98058 (US)
(74) Representative: Howson, Richard G.B.
(86) International application number: PCT/US2008/087260
(87) International publication number: WO 2010/071643

(56) References cited:
- EP-A- 1 894 840
- EP-A1- 0 483 773
- FR-A- 2 569 652
- US-A- 6 084 371
- US-A1- 2003 205 643
- US-B1- 6 272 924

## Description

### BACKGROUND

The present disclosure relates generally to aircraft and, in particular, to refueling aircraft. Still more particularly, the present disclosure relates to a method, apparatus, and computer usable program code for controlling a refueling boom.

Aerial refueling may be a process of transferring fuel from one aircraft to another aircraft. The aircraft from which the fuel originates may be referred to as a tanker, while the other aircraft receiving the fuel may be referred to as a receiver. This type of process may be applied to various types of aircraft including, for example, without limitation, fixed wing aircraft and/or helicopters.

One common approach for refueling may involve a boom and receptacle system. With a boom, a fixed tube and a telescoping tube may be present on the tank aircraft. These tubes may also be referred to as a refueling boom or a telescoping refueling boom. The refueling boom may be attached to the rear of the tanker aircraft and may be a flexible refueling boom allowing movement along an x-axis and a y-axis relative to the tanker. An operator may extend and/or position the refueling boom for insertion into a receptacle on the receiving aircraft to transfer fuel to the receiving aircraft.

Further, a refueling boom operator may control the ruddevators for a refueling boom to control the pitch and yaw of the refueling boom. The flexibility of the refueling boom may add a challenge to positioning the refueling boom when a refueling boom operator manipulates a control stick to operate the refueling boom. Movement of the ruddevators may be performed in concert or together, since the refueling boom may use a pitch and yaw pivot, while the ruddevators may be in a "V" configuration.

Physical contact between a refueling boom and the receptacle of the receiving aircraft may result in increased forces between the refueling boom and the receptacle. These forces may be due to the refueling boom not being directly in line with the receptacle, the receiving aircraft moving laterally and/or vertically, and/or the control surfaces of the refueling boom not being properly trimmed. Loads generated by contact between the refueling boom and the receiver may prevent the refueling boom from moving to a commanded position. These loads may cause boom bending and instability. Further, these loads may cause breakage or disconnecting of the refueling boom. Alleviating these loads by moving the refueling boom may allow the refueling boom to move with the receiver and may allow the receiver to move more freely.

Existing solutions may use an automatic load alleviation system (ALAS) to move the refueling boom to reduce the loads. In addition to alleviating loads, the automatic load alleviation system may allow for handling sudden transitions between the refueling boom flying free and being in contact with the receiver. Current solutions may handle these transitions by using separate modes of operation for the refueling boom being in free-flight and being coupled to the receiver. These modes may be triggered manually by an operator.

These separate modes may make it possible for the automatic load alleviation system to be in the wrong mode at the wrong time. Further, manual triggering of these modes may increase the amount of time it takes to transfer fuel and may lead to inadvertent striking of the receiving aircraft in areas outside of the receptacle. The automatic load alleviation system operating in the wrong mode at the wrong time may lead to instability of the refueling boom.

In addition, current solutions do not allow for the automatic load alleviation system and the operator of the refueling boom to control the refueling boom at the same time. Thus, periods of time may occur in which the operator has no control of the refueling boom. This may pose issues in situations where the automatic load alleviation system may be operating less than reliably.

Therefore, it would be desirable to have a method, apparatus, and computer program code that may overcome one or more of the issues described above, as well as other possible issues.

EP 1894840 relates to a refueling apparatus for interconnecting a tanker aircraft with a receiver aircraft in flight comprising a boom joined to said tanker aircraft by means of a mechanical articulation having control means including a central computer station, an inner fuel conduit, a refueling nozzle at its distal end and, and a smart tip assembly comprising a first module having load sensing means, a second module having load alleviation means and a third module, joined to the nozzle, having a mechanical fuse for allowing the safe separation of tanker and receiver aircraft in the event of overloads. The invention also comprises a method of load alleviation for minimizing the loads on the boom.

US 2003 205 643 relates to an aircraft refueling boom load alleviation system which uses received light to detect boom displacement and generates a control signal to correct the displacement. Both a set of flight surfaces and a plurality of light imageable targeting sights are disposed on a refueling tube. At least one digital camera converts the light imageable shape of each of the targeting sights to individual pixel images. The pixel images converted by the digital camera are input to a computer system. The computer system recognizes either a displacement of pixel images or a quantity change of pixels between pixel images as a displacement of the refueling tube. The computer system calculates the displacement of any of the pixel images. A signal is generated to control the refueling tube flight surfaces to correct the displacement.

EP 0483773 relates to an apparatus and method for simulating a desired response in accordance with an external applied force (Fin). The apparatus includes a member (30b) which is responsive to the applied force, an actuator (20) coupled to the member for exerting a torque on the member, a force sensor (32) for detecting the applied force (Fin), and a torque sensor (22) for detecting the troque exerted by the actuator (20). Signals from the force sensor are used to determine the system response based upon a desired relation. The force sensor signals also are used to determine the actual system response based upon the physical characteristics of the apparatus. The detected torque is compared with the desired and the actual system response, and as a result of the comparison the torque exerted by the actuator onto the member is adjusted accordingly so that the member performs the desired system response. The actuator (20) is preferably an electric motor so that the apparatus can simulate any desired response, notwithstanding the physical characteristics of the system.

The present invention is set out in the independent claims, with some optional features set out in the claims dependent thereto.

### SUMMARY

The features, functions, and advantages can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the advantageous embodiments are set forth in the appended claims. The advantageous embodiments, however, as well as a preferred mode of use, further objectives, and advantages thereof, will best be understood by reference to the following detailed description of an advantageous embodiment of the present disclosure when read in conjunction with the accompanying drawings, wherein:
**Figure 1** is a diagram of an aircraft in which an advantageous embodiment may be implemented;
**Figure 2** is a diagram of a data processing system in accordance with an illustrative embodiment;
**Figure 3** is a diagram of a refueling environment in accordance with an advantageous embodiment;
**Figure 4** is a diagram of one implementation for a refueling environment in accordance with an advantageous embodiment;
**Figure 5** is a more detailed illustration of a refueling boom in accordance with an advantageous embodiment;
**Figure 6** is a control data flow diagram of a refueling boom control environment in accordance with an advantageous embodiment;
**Figure 7** is a diagram of control laws for generating a command to alleviate forces on a refueling boom in accordance with an advantageous embodiment;
**Figure 8** is a flowchart of a process for managing force on a refueling boom in accordance with an advantageous embodiment; and
**Figure 9** is a flowchart of a process for alleviating forces on a refueling boom in accordance with an advantageous embodiment.

### DETAILED DESCRIPTION

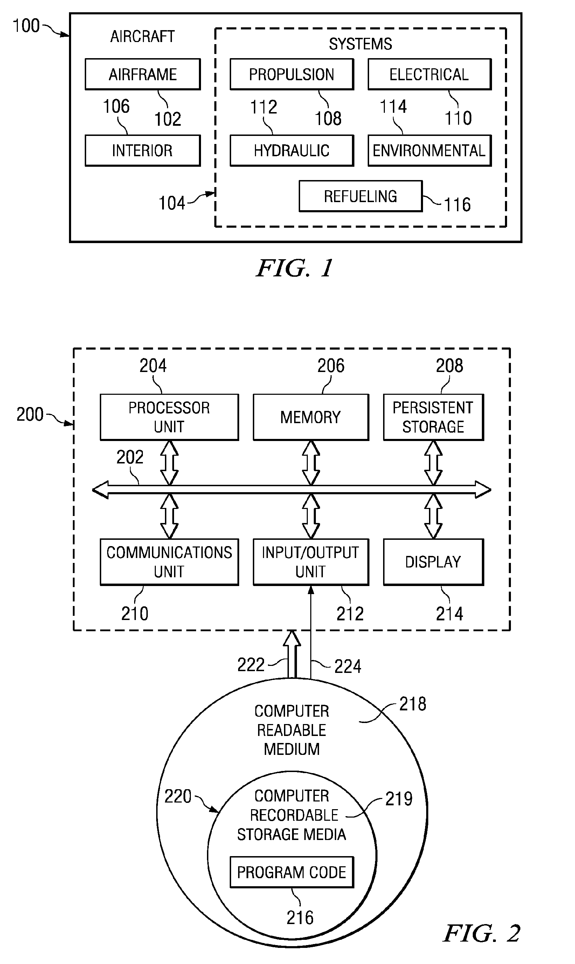

Referring more particularly to the drawings, embodiments of the disclosure may be described in the context of an aircraft, such as, for example, aircraft **100** as shown in **Figure 1****.**

With reference now to **Figure 1****,** a diagram of an aircraft is depicted in which an advantageous embodiment may be implemented. In this example, aircraft **100** in **Figure 1** may include airframe **102** with a plurality of systems **104** and interior **106**. Examples of systems **104** include one or more of propulsion system **108**, electrical system **110**, hydraulic system **112**, environmental system **114**, and refueling system **116**. Any number of other systems may be included. Different advantageous embodiments may be implemented within refueling system **116** in these depicted examples. Although an aerospace example is shown, different advantageous embodiments may be applied to other industries, such as the automotive industry.

Turning now to **Figure 2**, a diagram of a data processing system is depicted in accordance with an illustrative embodiment. Data processing system **200** is an example of the data processing system that may be located within aircraft **200**. For example, data processing system **200** may be part of electrical system **110** and/or refueling system **116.** Data processing system **200** may implement different processes for managing movement of a refueling boom. In this illustrative example, data processing system **200** includes communications fabric **202**, which provides communications between processor unit **204**, memory **206,** persistent storage **208**, communications unit **210,** input/output (I/O) unit **212**, and display **214**.

Processor unit **204** serves to execute instructions for software that may be loaded into memory **206**. Processor unit **204** may be a set of one or more processors or may be a multi-processor core, depending on the particular implementation. Further, processor unit **204** may be implemented using one or more heterogeneous processor systems in which a main processor is present with secondary processors on a single chip. As another illustrative example, processor unit **204** may be a symmetric multi-processor system containing multiple processors of the same type.

Memory **206** and persistent storage **208** are examples of storage devices. A storage device is any piece of hardware that is capable of storing information either on a temporary basis and/or a permanent basis. Memory **206**, in these examples, may be, for example, a random access memory or any other suitable volatile or non-volatile storage device.

Persistent storage **208** may take various forms depending on the particular implementation. For example, persistent storage **208** may contain one or more components or devices. For example, persistent storage **208** may be a hard drive, a flash memory, a rewritable optical disk, a rewritable magnetic tape, or some combination of the above. The media used by persistent storage **208** also may be removable. For example, a removable hard drive may be used for persistent storage **208.**

Communications unit **210**, in these examples, provides for communications with other data processing systems or devices. In these examples, communications unit **210** is a network interface card. Communications unit **210** may provide communications through the use of either or both physical and wireless communications links.

Input/output unit **212** allows for input and output of data with other devices that may be connected to data processing system **200.** For example, input/output unit **212** may provide a connection for user input through a keyboard and mouse. Further, input/output unit **212** may send output to a printer. Display **214** provides a mechanism to display information to a user.

Instructions for the operating system and applications or programs are located on persistent storage **208**. These instructions may be loaded into memory **206** for execution by processor unit **204**. The processes of the different embodiments may be performed by processor unit **204** using computer implemented instructions, which may be located in a memory, such as memory **206**. These instructions are referred to as program code, computer usable program code, or computer readable program code that may be read and executed by a processor in processor unit **204**. The program code in the different embodiments may be embodied on different physical or tangible computer readable media, such as memory **206** or persistent storage **208**.

Program code **216** is located in a functional form on computer readable medium **218** that is selectively removable and may be loaded onto or transferred to data processing system **200** for execution by processor unit **204**. Program code **216** and computer readable medium **218** form computer program product **220** in these examples. In one example, computer readable medium **218** may be in a tangible form such as, for example, an optical or magnetic disc that is inserted or placed into a drive or other device that is part of persistent storage **208** for transfer onto a storage device, such as a hard drive that is part of persistent storage **208**.

In a tangible form, computer readable medium **218** also may take the form of a persistent storage, such as a hard drive, a thumb drive, or a flash memory that is connected to data processing system **200**. The tangible form of computer readable medium **218** may be computer recordable storage media **219**. In some instances, computer readable medium **218** may not be removable.

Alternatively, program code **216** may be transferred to data processing system **200** from computer readable medium **218** through communications link **222** to communications unit **210** and/or through connection **224** to input/output unit **212**. Communications link **222** and/or connection **224** may be physical or wireless in the illustrative examples. Computer readable medium **218** also may take the form of non-tangible media, such as communications links or wireless transmissions containing program code **216**.

In some illustrative embodiments, program code **216** may be downloaded over a network to persistent storage **208** from another device or data processing system for use within data processing system **200**. For instance, program code stored in a computer readable storage medium in a server data processing system may be downloaded over a network from the server to data processing system **200**. The data processing system providing program code **216** may be a server computer, a client computer, or some other device capable of storing and transmitting program code **216**.

The different components illustrated for data processing system **200** are not meant to provide architectural limitations to the manner in which different embodiments may be implemented. The different illustrative embodiments may be implemented in a data processing system including components in addition to, or in place of, those illustrated for data processing system **200**.

Other components shown in **Figure 2** can be varied from the illustrative examples shown. The different embodiments may be implemented using any hardware device or system capable of executing program code. As one example, the data processing system may include organic components integrated with inorganic components and/or may be comprised entirely of organic components excluding a human being. For example, a storage device may be comprised of an organic semiconductor.

As another example, a storage device in data processing system **200** may be any hardware apparatus that may store data. Memory **206**, persistent storage **208**, and computer readable medium **218** may be examples of storage devices in a tangible form.

In another example, a bus system may be used to implement communications fabric **202** and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory **206** or a cache such as found in an interface and memory controller hub that may be present in communications fabric **202**.

The different advantageous embodiments recognize that forces on a refueling boom may increase due to movement of the receiving aircraft, misalignment of the refueling boom with the receptacle of the refueling boom at contact, and/or inadequate trimming of control surfaces of the refueling boom. These forces may cause a refueling boom to move to a position not desired and/or commanded by the operator of the refueling boom. The different advantageous embodiments also recognize that these forces on the refueling boom may cause boom bending and boom instability. These forces may also cause breakage and/or disconnecting of the refueling boom.

Currently available solutions of load alleviation systems for alleviating these forces may not allow an operator to have complete control of the refueling at all times. Further, currently available load alleviation systems may operate in separate manual modes that may allow for these load alleviation systems to operate in the wrong mode at the wrong time. This may be due to a failure in the system or due to human error. In addition, manual triggering of these modes may lead to inadvertent striking of the receiving aircraft by the refueling boom, which may in turn, lead to damage to the refueling boom and/or receiving aircraft.

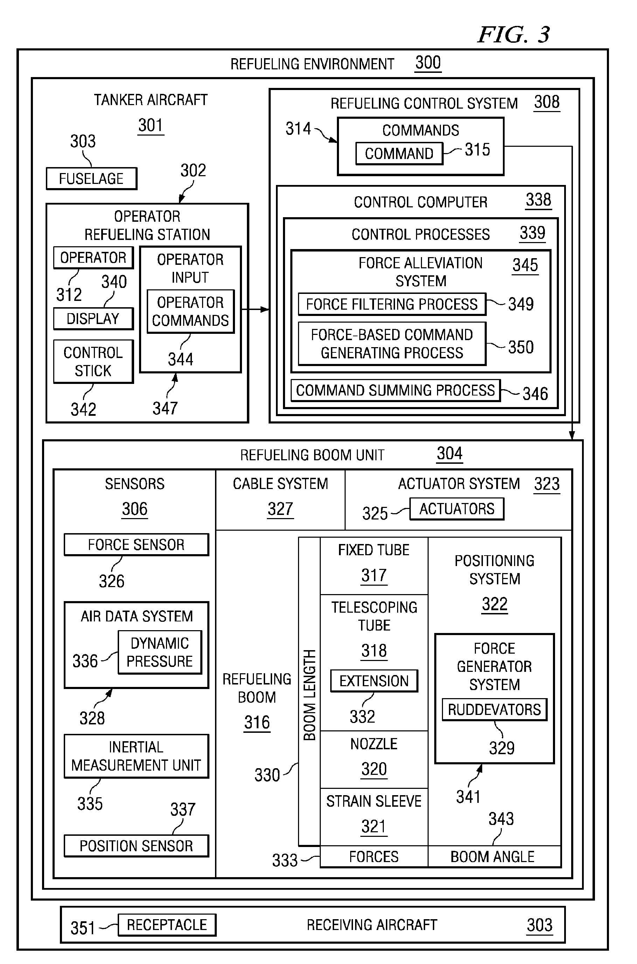

With reference now to **Figure 3**, a diagram of a refueling environment is depicted in accordance with an advantageous embodiment. In this example, refueling environment **300** may be implemented for tanker aircraft **301**. Tanker aircraft **301** may be one example of aircraft **100** in **Figure 1**. Refueling environment **300** may also include receiving aircraft **303**.

Tanker aircraft **301** may include operator refueling station **302**, refueling boom unit **304**, refueling control system **308**, and/or other suitable components. In these illustrative examples, operator refueling station **302**, refueling boom unit **304,** and refueling control system **308** may be part of refueling system **116** in **Figure 1**. The different components may be implemented using one or more data processing systems such as, for example, data processing system **200** in **Figure 2**.

Operator refueling station **302** may provide a location for operator **312** to control refueling boom unit **304**. Operator refueling station **302** may send operator input **347** to refueling control system **308**. In turn, refueling control system **308** may generate commands **314**, which are sent to refueling boom unit **304** to control refueling boom **316**. For example, command **315** within commands **314** may move refueling boom **316**.

Refueling boom unit **304** may include refueling boom **316**, sensor system **306,** cable system **327**, and actuator system **323**. Refueling boom **316** may have fixed tube **317**, telescoping tube **318**, nozzle **320**, strain sleeve **321**, and positioning system **322**. Strain sleeve **321** may be attached to nozzle **320**. In this illustrative example, positioning system **322** may be a number of force generators. A number of items, as used herein, refers to one or more items. For example, a number of force generators is one or more force generators.

In this particular example, positioning system **322** may take the form of force generator system **341**. In these illustrative examples, force generator system **341** may take the form of ruddevators **329**. Of course, in other advantageous embodiments, force generator system **341** may take the form of other force generators such as, for example, without limitation, control surfaces, other aerodynamic force generators, and/or some other suitable force generator. Ruddevators **329** may be arranged in a "V" shape on fixed tube **317** in these examples.

Actuator system **323** may move refueling boom **316** with respect to tanker aircraft **301** in which refueling boom unit **304** is attached. In these examples, actuator system **323** may contain actuators **325**. Refueling boom **316** may move to change boom angle **343** and boom length **330** under the control of actuator system **323.**

Actuators **325** may control ruddevators **329** in positioning system **322** to change boom angle **343** of refueling boom **316.** Further, cable system **327** may be activated to change boom angle **343** of refueling boom **316.**

In these illustrative examples, boom length **330** may be the length of fixed tube **317** plus the length of telescoping tube **318,** nozzle **320,** and strain sleeve **321.**

Telescoping tube **318** may move with respect to fixed tube **317** to provide extension **332** for telescoping tube **318** in refueling boom **316.** Extension **332** for telescoping tube **318** may be controlled by actuators **325** within actuator system **323** in these illustrative examples. Extension **332** of telescoping tube **318** may change. When extension **332** changes, boom length **330** of refueling boom **316** may change. Boom length **330** may change by changing extension **332** in a manner that may reduce boom length **330** or increase boom length **330.** Boom length **330** may be identified using sensor system **306.**

Sensor system **306** may include, for example, without limitation, inertial measurement unit **335,** position sensor **337,** force sensor **326,** air data system **328,** and other suitable sensors. Inertial measurement unit **335** may identify accelerations and rates in three axes for refueling boom **316.** Position sensor **337** may be used to identify boom angle **343.** Further, position sensor **337** also may be used to identify the length of extension **332** of refueling boom **316.** Position sensor **337** may be implemented using position sensors in the form of, for example, without limitation, a potentiometer or some other suitable position sensor. Position sensor **337** may be one or more positions sensors.

Force sensor **326** may be used to identify forces **333** on refueling boom **316** due to contact with receiving aircraft **303.** Force sensor **326** may be located on strain sleeve **321** attached to nozzle **320** of refueling boom **316.** Sensor system **306** may also include air data system **328,** which may be used to measure dynamic pressure **336** for tanker aircraft **301.**

In these examples, refueling control system **308** may have control computer **338,** which may have processes that execute on control computer **338.** Control processes **339** may have control laws, which may be examples of processes that may execute on control computer **338** within refueling control system **308** to control refueling boom unit **304.** Refueling control system **308** may send information back to operator refueling station **302** for display on display **340** in operator refueling station **302.** Operator refueling station **302** also may include control stick **342** to generate operator commands **344,** which are sent to refueling control system **308** for processing. Operator commands **344** may include a command to move refueling boom **316** to a desired position.

Refueling control system **308** may process operator commands **344** using control processes **339** to generate commands **314.** Commands **314** may be a result of modifications and/or limits to operator commands **344** generated at operator refueling station **302.**

Control processes **339** may include processes for controlling refueling boom unit **304** to alleviate forces **333** on refueling boom **316.** These processes may include, for example, force alleviation system **345** and command summing process **346.** Force alleviation system **345** may include processes such as, for example, force filtering process **349** and force-based command generating process **350.** Force alleviation system **345** and command summing process **346** may be used to generate a command such as, for example, command **315,** to alleviate forces **333** to reduce boom bending and prevent boom breakage and/or disconnecting. Command **315** may move refueling boom **316** to position it more directly in line with receptacle **351** of receiving aircraft **303.** In these examples, receptacle **351** may be a receptacle for nozzle **320** of refueling boom **316.** Receptacle **351** may receive fuel through nozzle **320.**

The illustration of refueling environment **300** is not meant to imply physical or architectural limitations to the manner in which different refueling environments may be implemented. For example, other components in addition to, or in place, of the ones illustrated may be used. Also, in some advantageous embodiments, fewer components than those illustrated for refueling environment **300** may be used.

As one example, in some advantageous embodiments, operator refueling station **302** and refueling control system **308** may be integrated as a single component or system. In yet other advantageous embodiments, a number of additional refueling boom units may be deployed in addition to refueling boom unit **304.**

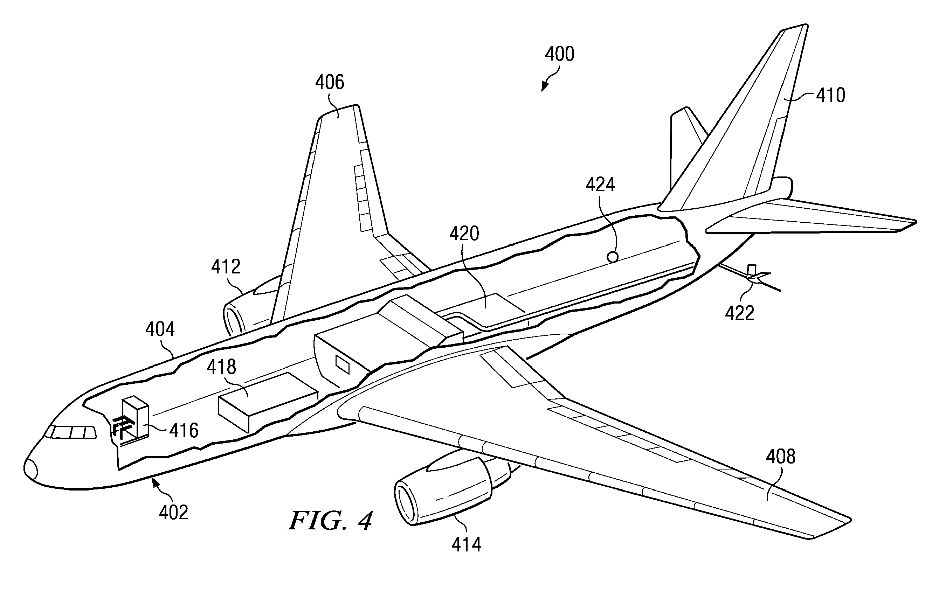

With reference now to **Figure 4****,** a diagram of one implementation for a refueling environment is depicted in accordance with an advantageous embodiment. In this example, refueling environment **400** is an example of one implementation for refueling environment **300** in **Figure 3****.**

In this illustrative example, aircraft **402** is shown in an exposed view. Aircraft **402** may have fuselage **404,** wing **406,** wing **408,** tail **410,** engine **412,** and engine **414.** In this example, aircraft **402** may contain operator refueling station **416,** auxiliary fuel tank **418,** auxiliary fuel tank **420,** and refueling boom **422.** In the different advantageous embodiments, an operator at operator refueling station **416** may control refueling boom **422** to perform refueling operations.

Refueling control system **424** may generate appropriate commands to refueling boom **422** in response to operator commands generated by an operator at operator refueling station **416.** The different operations that refueling control system **424** may command include, for example, without limitation, movement of refueling boom **422.**

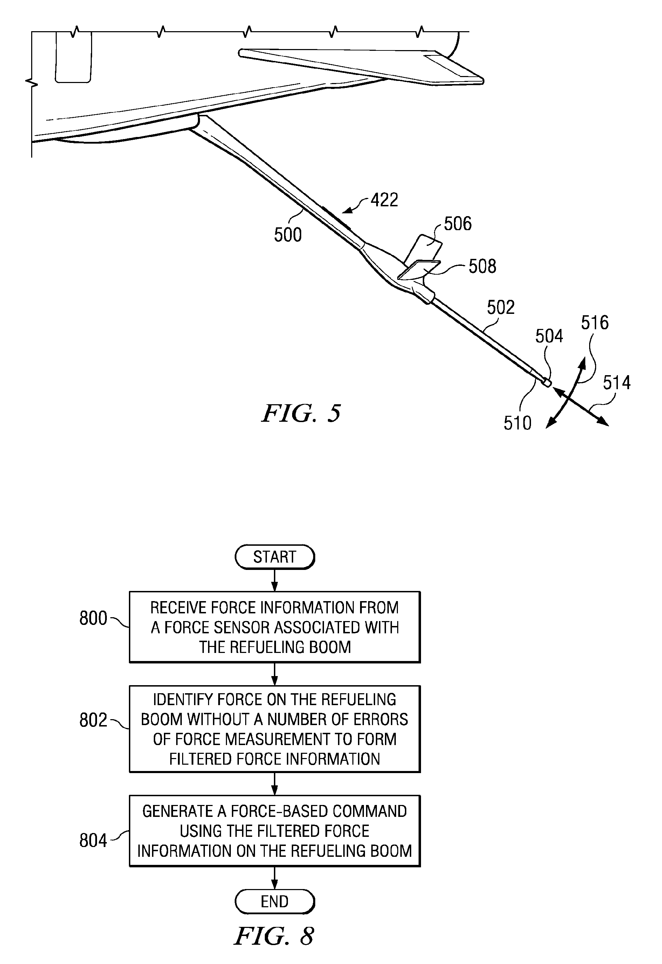

With reference now to **Figure 5****,** a more detailed illustration of a refueling boom is depicted in accordance with an advantageous embodiment. In this illustrative example, a more detailed view of refueling boom **422** is illustrated.

Refueling boom **422** may include fixed tube **500,** telescoping tube **502,** nozzle **504,** ruddevator **506,** ruddevator **508,** and strain sleeve **510.** Telescoping tube **502** may extend or retract along the direction of arrow **514.** Refueling boom **422** also may move in an azimuth direction as indicated by arrow **516.** The movement of refueling boom **422** in elevation along the direction of arrow **514** and along the azimuth direction as indicated by arrow **516** may be controlled using ruddevators **506** and **508.** In these examples, ruddevators **506** and **508** may be examples of ruddevators **329** for positioning system **322** in **Figure 3****.** Ruddevators **506** and **508** may be configured in a "V" configuration in these depicted examples. Strain sleeve **510** on nozzle **504** may be an example of strain sleeve **321** and may have a sensor such as, for example, force sensor **326** in **Figure 3****,** for measuring forces on refueling boom **422.**

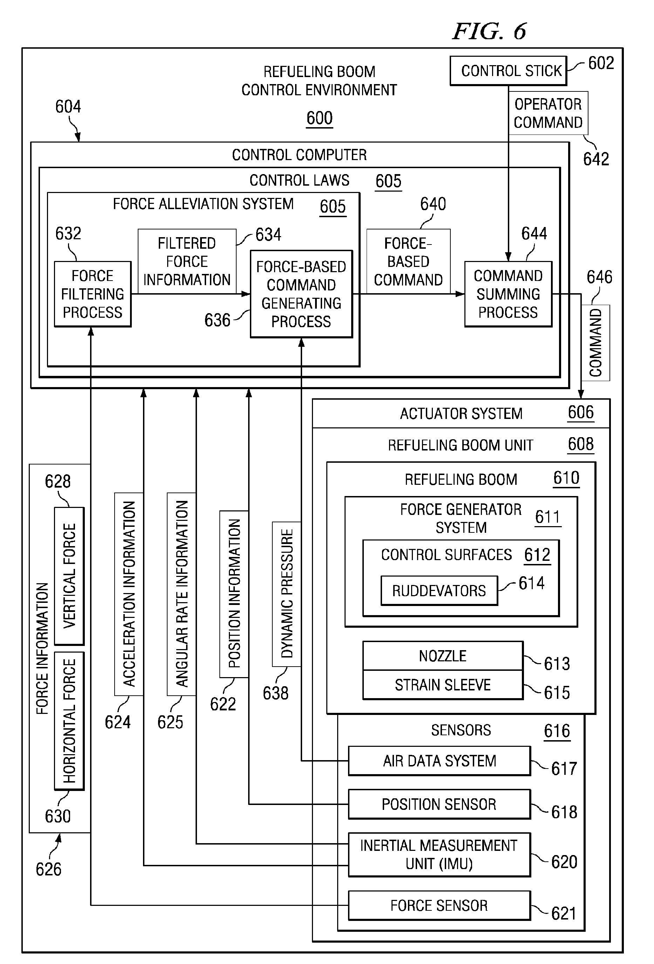

With reference now to **Figure 6****,** a control data flow diagram of a refueling boom control environment is depicted in accordance with an advantageous embodiment. Refueling boom control environment **600** may include control stick **602,** control computer **604,** actuator system **606,** and refueling boom unit **608.**

In these illustrative examples, refueling boom control environment **600** may represent one example of an implementation of refueling environment **300** in **Figure 3****.** Control stick **602** may be one example of control stick **342** in operator refueling station **302** in **Figure 3****.** Control computer **604** may be one example of an implementation of control computer **338.** Control computer **604** may be used to execute processes such as, for example, control laws **605.** Control laws **605** may be examples of processes within, for example, control processes **339.** Actuator system **606** may be one example of an implementation of actuator system **323.** Refueling boom unit **608** may be one example of an implementation of refueling boom unit **304.**

In these illustrative examples, refueling boom unit **608** may include refueling boom **610,** which may have force generator system **611.** Force generator system **611** may include control surfaces **612.** Control surfaces **612** may take the form of ruddevators **614,** which may be controlled by actuator system **606.** Further, refueling boom **610** may include nozzle **613** and strain sleeve **615** located on nozzle **613.**

Refueling boom unit **608** may also include sensors **616,** attached to and/or mounted onto refueling boom **610.** Sensors **616** may include air data system **617,** position sensor **618,** inertial measurement unit (IMU) **620,** and force sensor **621.**

Sensors **616** may send acceleration, rate, and position information to control computer **604.** Specifically, in this example, position sensor **618** may send position information **622** to control computer **604,** and inertial measurement unit **620** may send acceleration information **624** and angular rate information **625** to control computer **604.** Position information **622** and acceleration information **624** may be sent to control computer **604** for use by processes within control computer **604.**

Force sensor **621** may send force information such as, for example, force information **626,** to control computer **604** for use by force filtering process **632.** Force information **626** may be information about the forces on refueling boom **610.** Force information **626** may include information about vertical force **628** and horizontal force **630.** Vertical force **628** may be the force on refueling boom **610** within an elevation or vertical axis with respect to the plane of the aircraft. Horizontal force **630** may be the force on refueling boom **610** within an azimuth or lateral axis with respect to the plane of the aircraft.

Force information **626** may be used by force filtering process **632** to generate filtered force information **634.** Force filtering process **632** may remove disturbances and/or noise from force information **626** and may smooth out force information **626** to generate filtered force information **634.** Filtered force information **634** may be then sent to force-based command generating process **636.** Further, air data system **617** may send dynamic pressure information in the form of dynamic pressure **638** to control computer **604** for use by force-based command generating process **636.** Force-based command generating process **636** may modify filtered force information **634** using dynamic pressure **638** in order to generate force-based command **640.** Force-based command **640** may be sent to command summing process **644.**

In these illustrative examples, control stick **602** may be a flight control stick that may be used by a refueling operator to generate operator commands such as, for example, operator command **642.** Operator command **642** may be sent to control computer **604** for use by command summing process **644.** Command summing process **644** may sum operator command **642** and force-based command **640** in order to generate command **646.** Command **646** may be sent to actuator system **606** to control movement of refueling boom **610** in order to reduce force information **626.** In this manner, force filtering process **632,** force-based command generating process **636,** and command summing process **644** may be used to continuously reduce force information **626** on refueling boom **610.**

The illustration of refueling boom control environment **600** in **Figure 6** is not meant to imply physical and/or architectural limitations to the manner in which refueling booms may be controlled to reduce the forces on refueling booms. For example, in other advantageous embodiments, force filtering process **632** may be implemented as one process or control law in control computer **604** or as two or more processes or control laws. In some other advantageous embodiments, force filtering process **632** and force-based command generating process **636** may be implemented as one process. In still other advantageous embodiments, force-based command generating process **636** and command summing process **644** may be combined as one process.

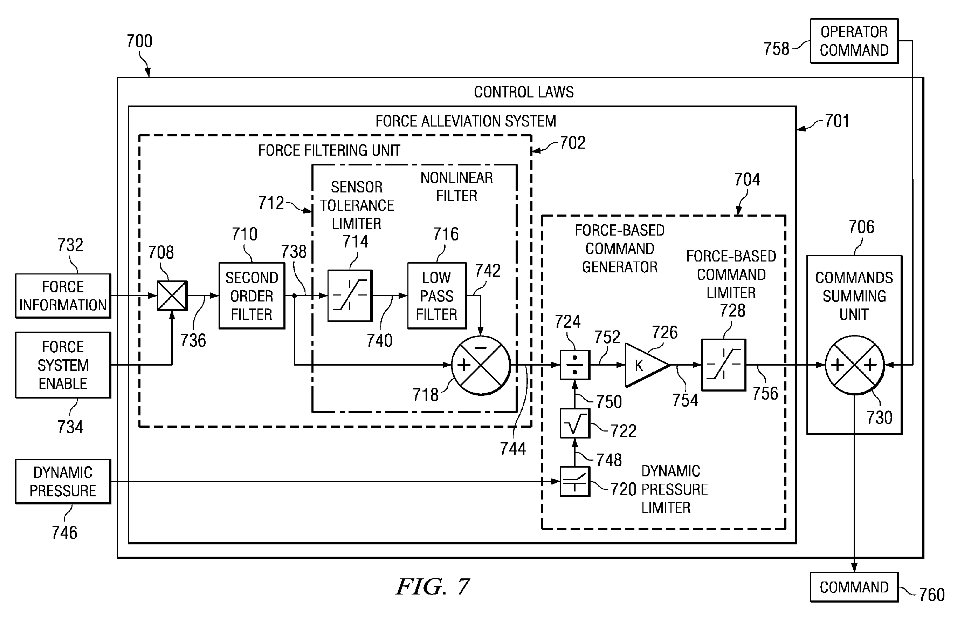

With reference now to **Figure 7****,** a diagram of control laws for generating a command to alleviate forces on a refueling boom is depicted in accordance with an advantageous embodiment. Control laws **700,** which may be control laws **605** in **Figure 6****,** may be implemented in a control computer such as, for example, control computer **604** in **Figure 6****.**

Control laws **700** may include force alleviation system **701** and commands summing unit **706.** Force alleviation system **701** may include force filtering unit **702** and force-based command generator **704.** Force filtering unit **702** may be one implementation of force filtering process **632,** and force-based command generator **704** may be one implementation for force-based command generating process 636 in **Figure 6****.** Further, commands summing unit **706** may be one implementation for command summing process **644.**

Force filtering unit **702** may include multiplier **708,** second order filter **710,** and nonlinear filter **712.** Nonlinear filter **712** may include sensor tolerance limiter **714,** low pass filter **716,** and subtractor **718.** Force-based command generator **704** may include dynamic pressure limiter **720,** square root **722,** divider **724,** gain **726,** and force-based command limiter **728.** Commands summing unit **706** may include adder **730.**

In this illustrative example, force information **732** and force system enable **734** may be multiplied by multiplier **708** in force filtering unit **702** to generate enabled force information **736.** Force information **732** may be force information provided by a force sensor such as, for example, force sensor **621** in **Figure 6****.** Force information **732** may be information about one of vertical force **628** and horizontal force **630.** Force system enable **734** may be a signal with a value that indicates whether the force sensor may have failed and/or whether an operator has turned force alleviation system **701** on or off. If the force sensor has failed and/or force alleviation system **701** has been turned off, force system enable **734** may take the value of "0". Otherwise, force system enable **734** may take the value of "1".

In this manner, enabled force information **736** may take the value of force information **732** for use in generating a force-based command, such as, for example, force-based command **640** or may take the value of "0" to indicate that a null force-based command may be generated. Enabled force information **736** may be sent as input to second order filter **710** to generate smoothed out force information **738.** Second order filter **710** may remove disturbances and/or noise from enabled force information **736** and may smooth out enabled force information **736.** Thus, smoothed out force information **738** may be force information without disturbances and/or noise. Smoothed out force information **738** may be sent as input to sensor tolerance limiter **714** within nonlinear filter **712.**

Sensor tolerance limiter **714** may allow for force information within the values of sensor tolerance limiter **714** to be processed. In these illustrative examples, sensor tolerance limiter **714** may allow force information for forces within the values of a force sensor tolerance error to pass. The force sensor tolerance error may be a sensor tolerance of force sensor **621.** For example, force sensor **621** may have a sensor tolerance error of around plus or minus 100 pounds of force. Sensor tolerance limiter **714** may generate sensor tolerance limited force information **740** to be sent as input to low pass filter **716.**

Low pass filter **716** may further filter sensor tolerance limited force information **740** by rejecting high frequency content and allowing low frequency content to pass. In these examples, low frequency content may include forces within a sensor bias error. In these examples, the sensor bias error may be low frequency forces due to air, wind, and/or some other suitable factor during free flight.

For example, force sensor **621** may measure a force of around plus or minus 40 pounds due to wind hitting nozzle **613** during free flight. This force may be a low frequency force that may be within a sensor bias error. In these illustrative examples, the sensor bias error may be a threshold value, a range of values, or some other suitable value. In this manner, low pass filter **716** may allow force information for refueling boom **610** within a sensor bias error during free flight to pass, while rejecting force information for forces that may be due to contact with the receiving aircraft.

The forces due to sensor bias error during free flight may be low frequency forces. Low pass filter **716** may generate low pass filtered force information **742,** which may be then subtracted from smoothed out force information **738** at subtractor **718** to generate filtered force information **744.** This implementation may allow for force information for forces due to sensor tolerance error and low frequency forces due to sensor bias error to be ignored. These constant forces and/or sensor bias errors, which may be measured during free flight, may be ignored.

Filtered force information **744** may take a null value if force information **732** may only be attributed to sensor bias error and/or air loads experienced during free flight. A null value for filtered force information **744** may lead to a null force-based command being generated. Thus, in this manner, this implementation may allow for force alleviation system **701** to be on at all times, including free flight, without the need for operator input. Force alleviation system **701** may generate a force-based command when force information **732** has a value significant enough to cause boom bending and/or instability. Filtered force information **744** may be sent as input to divider **724** of force-based command generator **704.**

In this illustrative example, dynamic pressure **746** may be dynamic pressure **638** in **Figure 6****.** Dynamic pressure **746** may be sent to dynamic pressure limiter **720** to generate limited dynamic pressure **748.** Dynamic pressure limiter **720** may prevent filtered force information **744** from being divided by zero at divider **724.** In this manner, dynamic pressure limiter **720** ensures that zero is not the denominator for divider **724** when dynamic pressure **746** is zero such as, for example, when an aircraft is on the ground and not moving.

Limited dynamic pressure **748** may be then sent to square root **722** to generate square root of limited dynamic pressure **750.** Square root of limited dynamic pressure **750** may be used for taking into account a changing parameter affecting force information **732** where dynamic pressure **746** may be the changing parameter. In this manner, force alleviation system **701** may use adaptive control of filtered force information **744** to allow for sensitivity to flight conditions, in particular, changing dynamic pressure. Dynamic pressure **746** may depend on aircraft speed, which may change during flight.

Filtered force information **744** may be divided by square root of limited dynamic pressure **750** using divider **724** to generate dynamic pressure scheduled force information **752.** Dynamic pressure scheduled force information **752** may be then multiplied by K at gain **726.** In this illustrative example, K may be a gain specified to tune the sensitivity of force alleviation system **701** in order to achieve increased stability and performance in the generation of a force-based command. In other words, gain **726** may be a value selected to increase stability in force alleviation system **701** when applied to dynamic pressure scheduled force information **752.** Gain **726** may be selected by obtaining a transfer function using simulation or system identification from flight test data. Gain **726** may be then set to a value most consistent with maintaining stability in force alleviation system **701.** Gain **726** may generate as an output, force-based command **754,** which may be a command to control refueling boom **610.**

Force-based command **754** may be sent to force-based command limiter **728** to generate limited force-based command **756.** Limited force-based command **756** may be then sent to adder **730** within commands summing unit **706** to be summed with operator command **758.** Operator command **758** may be an operator command such as, for example, operator command **642.** The summing of limited force-based command **756** and operator command **758** may allow for limited force-based command **756** to be added to operator command **758** to generate command **760** for alleviation of force information **732** to control boom bending. Force-based command limiter **728** may allow for an operator to maintain full control of refueling boom **610** at all times. The operator may override limited force-based command **756** at any time due to force-based command limiter **728.**

This implementation of force alleviation system **701** may allow for an operator to alleviate the force described by force information **732** by using a control stick such as, for example, control stick **602,** to generate an operator command and work with force alleviation system **701.** This implementation may also allow for an operator to remain hands-off and allow force alleviation system **701** to control refueling boom **610.**

Further, this implementation may allow an operator to turn off force alleviation system **701** and have complete control of alleviating the force described by force information **732** using control stick **602.** In this illustrative example, operator command **758** and limited force-based command **756** may not be mutually exclusive. Thus, in this manner, force alleviation system **701** may provide a way for using force information **626** on refueling boom **610** to generate a command for controlling the forces on refueling boom **610** so as to alleviate boom bending and instability. In these illustrative examples, force alleviation system **701** may be implemented for vertical force **628** and for horizontal force **630** in parallel in order to generate command **760.**

With reference now to **Figure 8****,** a flowchart of a process for managing force on a refueling boom is depicted in accordance with an advantageous embodiment. The process in **Figure 8** may be implemented within a refueling boom control environment such as, for example, refueling boom control environment **600** in **Figure 6****.**

The process may begin by receiving force information **626** from force sensor **621** associated with refueling boom **610** (operation **800**). Force information **626** may be force information about vertical force **628** and/or horizontal force **630.** The process may then identify force on refueling boom **610** without a number of errors of force measurement to form filtered force information **634** (operation **802**). In these illustrative examples, operation **802** may be performed by removing noise, sensor tolerance error, and sensor bias error from force information **626.** The process may then generate force-based command **640** using filtered force information **634** on refueling boom **610** (operation **804**), with the process terminating thereafter.

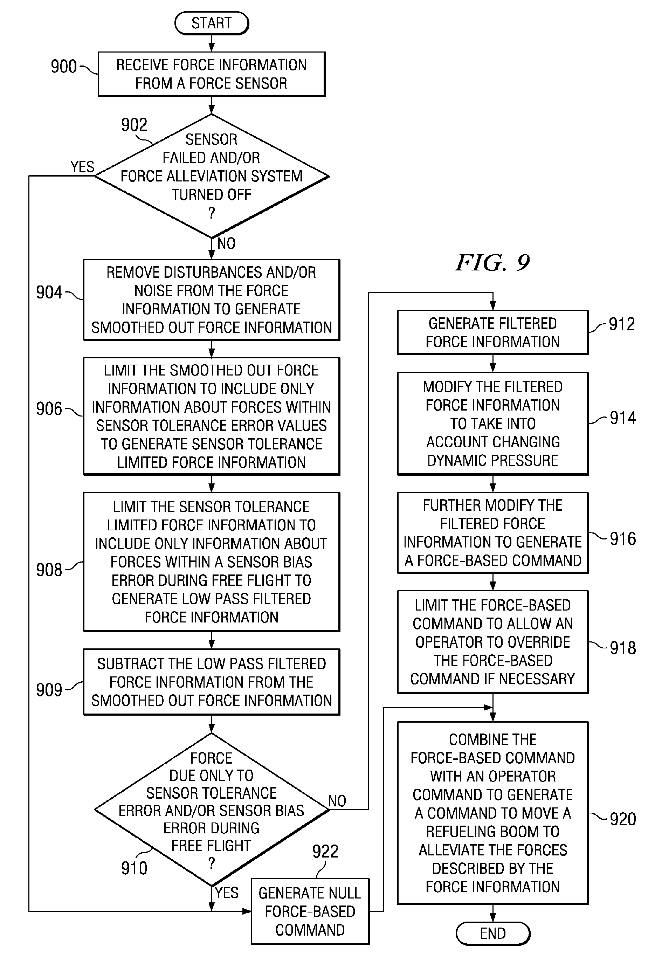

With reference now to **Figure 9****,** a flowchart of a process for alleviating forces on a refueling boom is depicted in accordance with an advantageous embodiment. The process in **Figure 9** may be implemented within control laws such as, for example, control laws **700** in **Figure 7****.**

The process may begin by receiving force information from a force sensor (operation **900**). This force information may be force information **732** about the force on a refueling boom. The process then may determine whether the force sensor has failed and/or the force alleviation system has been turned off (operation **902**). In these examples, this force alleviation system may be force alleviation system **701** in **Figure 7****.** If the sensor has not failed and force alleviation system **701** is turned on, the process may remove disturbances and/or noise from the force information to generate smoothed out force information (operation **904**).

The smoothed out force information may then be limited to include only information about forces within the sensor tolerance error values in order to generate sensor tolerance limited force information (operation **906**). The process may then further limit the sensor tolerance limited force information to include only information about forces due to sensor bias error occurring during free flight in order to generate low pass filtered force information (operation **908**). Operation **908** may be executed using a low pass filter such as, for example, low pass filter **716.**

The process may then subtract the low pass filtered information from the smoothed out information to generate filtered force information (operation **909**). The process may then determine whether the force may be due only to sensor tolerance error and/or sensor bias error during free flight (operation **910**). This determination may be made by using the result of operation **909.** If the forces may not be due only to sensor tolerance error and/or sensor bias error, the process may generate filtered force information (operation **912**). The filtered force information may be the result of subtracting the low pass filtered information from the smoothed out information. The filtered force information may be then modified to take into account changing dynamic pressure (operation **914**). The filtered force information may be further modified to generate a force-based command (operation **916**). Operation **916** may be executed using a gain such as, for example, gain **726.**

The process may then limit the force-based command to allow an operation to override the force-based command, if necessary (operation **918**). The process may combine the force-based command with an operator command to generate a command to move a refueling boom to alleviate the forces on the refueling boom as described by the force information(operation **920**), with the process terminating thereafter.

With reference again to operation **910**, if the forces may be due only to sensor tolerance error and/or sensor bias error, the process may generate a null force-based command (operation **922**). In this example, subtracting the low pass filtered force information from the smoothed out force information may result in a null force or zero force being used in the processes in force alleviation system **701.** The process may then continue to operation **920,** with the process terminating thereafter. In the same manner, with reference again to operation **902,** if the sensor has failed and/or the force alleviation system has been turned off, the process may proceed to operation **922** to generate a null force-based command. The process may then continue to operation **920,** with the process terminating thereafter.

The flowcharts and block diagrams in the different depicted embodiments illustrate the architecture, functionality, and operation of some possible implementations of apparatus, methods and computer program products. In this regard, each block in the flowchart or block diagrams may represent a module, segment, or portion of computer usable or readable program code, which comprises one or more executable instructions for implementing the specified function or functions.

In some alternative implementations, the function or functions noted in the blocks may occur out of the order noted in the figures. For example, in some cases, two blocks shown in succession may be executed substantially concurrently, depending upon the functionality involved.

The different advantageous embodiments can take the form of an entirely hardware embodiment, an entirely software embodiment, or an embodiment containing both hardware and software elements. Some embodiments are implemented in software, which includes, but is not limited to forms, such as, for example, firmware, resident software, and microcode.

Furthermore, the different embodiments can take the form of a computer program product accessible from a computer usable or computer readable medium providing program code for use by or in connection with a computer or any device or system that executes instructions. For the purposes of this disclosure, a computer usable or computer readable medium can generally be any tangible apparatus that can contain, store, communicate, propagate, or transport the program for use by or in connection with the instruction execution system, apparatus, or device.

The computer usable or computer readable medium can be, for example, without limitation, an electronic, magnetic, optical, electromagnetic, infrared, or semiconductor system, or a propagation medium. Nonlimiting examples of a computer readable medium include a semiconductor or solid state memory, magnetic tape, a removable computer diskette, a random access memory (RAM), a read-only memory (ROM), a rigid magnetic disk, and an optical disk. Optical disks may include compact disk - read only memory (CD-ROM), compact disk - read/write (CD-R/W), and DVD.

Further, a computer usable or computer readable medium may contain or store a computer readable or usable program code such that when the computer readable or usable program code is executed on a computer, the execution of this computer readable or usable program code causes the computer to transmit another computer readable or usable program code over a communications link. This communications link may use a medium that is, for example, without limitation, physical or wireless.

A data processing system suitable for storing and/or executing computer readable or computer usable program code will include one or more processors coupled directly or indirectly to memory elements through a communications fabric, such as a system bus. The memory elements may include local memory employed during actual execution of the program code, bulk storage, and cache memories which provide temporary storage of at least some computer readable or computer usable program code to reduce the number of times code may be retrieved from bulk storage during execution of the code.

Input/output or I/O devices can be coupled to the system either directly or through intervening I/O controllers. These devices may include, for example, without limitation, keyboards, touch screen displays, and pointing devices. Different communications adapters may also be coupled to the system to enable the data processing system to become coupled to other data processing systems or remote printers or storage devices through intervening private or public networks. Non-limiting examples are modems and network adapters and are just a few of the currently available types of communications adapters.

In another embodiment, there is provided an apparatus comprising: a control process (339) capable of receiving (800) force information (626) from a force sensor (326) associated with a refueling boom (316); identifying (802) forces (333) on the refueling boom (316) without a number of errors of force measurement to form filtered force information (634); and generating (804) a force-based command (640) using the filtered force information (634) for the refueling boom (316); and a computer (338) capable of executing the control process (339), wherein the control process (339) is stored on the computer (338).

Optionally, the apparatus further comprises: an aircraft (100); and the refueling boom (316), wherein the refueling boom (316) and the computer (338) are located in the aircraft (100).

Optionally, the number of errors of force measurement may be at least one of noise, a sensor tolerance error, and a sensor bias error.

Optionally, in identifying (802) the forces (333) on the refueling boom (316) without the number of errors of force measurement to form the filtered force information (634), the control process (339) is capable of limiting (908) force information (626) associated with the number of errors of force measurement to form low pass filtered force information (742); and subtracting (909) the low pass filtered force information (742) from smoothed out force information (738) to form filtered force information (634).

Optionally, in limiting (908) force information (626) associated with the number of errors of force measurement to form the low pass filtered force information (742), the control process (339) is capable of removing (904) noise from the force information (626) to form the smoothed out force information (738); limiting (906) a portion of the smoothed out force information (738) within a sensor tolerance error to form sensor tolerance limited force information (740); and limiting (908) a portion of the sensor tolerance limited force information (740) within a sensor bias error to form the low pass filtered force information (742).

Optionally, in removing (904) the noise from the force information (626) to form the smoothed out force information (738), the control process (339) is capable of filtering (904) the force information (626) using a second order filter (710) to remove the noise from the force information (626) to form the smoothed out force information (738).

Optionally, in limiting (906) the portion of the smoothed out force information (738) within the sensor tolerance error to form the sensor tolerance limited force information (740), the control process (339) is capable of limiting (906) the smoothed out force information (738) with a limiter (714) to limit the portion of the smoothed out force information (738) within the sensor tolerance error to form the sensor tolerance limited force information (740).

Optionally, in limiting (908) the portion of the sensor tolerance limited force information (740) containing forces (333) caused by the number of errors of force measurement to form the low pass filtered force information (742), the control process (339) is capable of filtering (908) the sensor tolerance limited force information (740) using a low pass filter (716) to pass the portion of the sensor tolerance limited force information (740) within the sensor bias error to form the low pass filtered force information (742).

The description of the different advantageous embodiments has been presented for purposes of illustration and description, and is not intended to be exhaustive or limited to the embodiments in the form disclosed. Many modifications and variations will be apparent to those of ordinary skill in the art. Further, different advantageous embodiments may provide different advantages as compared to other advantageous embodiments.

The embodiment or embodiments selected are chosen and described in order to best explain the principles of the embodiments, the practical application, and to enable others of ordinary skill in the art to understand the disclosure for various embodiments with various modifications as are suited to the particular use contemplated.

The subject matter described above is provided by way of illustration only and should not be construed as limiting. Various modifications and changes may be made to the subject matter described herein without following the example embodiments and applications illustrated and described.

## Claims

1. A method to manage forces (333) on a refuelling boom (316), the method comprising:
receiving (800) force information (626) from a force sensor (326) associated with the refuelling boom (316);
identifying (802) the forces (333) on the refuelling boom (316) without a number of errors of force measurement to form filtered force information (634); and
generating (804) a force-based command (640) using the filtered force information (634) for the refuelling boom (316);
controlling, using the force based command, movement of the refuelling boom to reduce forces described by the force information;
wherein the generating (804) step comprises:
generating (916) the force-based command (640) using the filtered force information (634) for the refuelling boom (316) and a dynamic pressure (638) for the aircraft (100) on which the refuelling boom (316) is located, wherein the force-based command (640) reduces the forces (333) on the refuelling boom (316).

2. The method of claim 1 further comprising:
combining (920) the force-based command (640) with an operator command (642) to form a command (646) for an actuator system (323) capable of controlling the refuelling boom (316).

3. The method of claim 2, wherein the actuator system (323) is capable of controlling a force generator system (341).

4. The method of claim 1, wherein the number of errors of force measurement may be at least one of noise, a sensor tolerance error, and a sensor bias error.

5. The method of claim 1, wherein the identifying (802) step comprises:
limiting (908) the force information (626) associated with the number of errors of force measurement to form low pass filtered force information (742);
removing (904) noise from the force information (626) to form the smoothed out force information (738); and
subtracting (909) the low pass filtered force information (742) from smoothed out force information (738) to form filtered force information (634).

6. The method of claim 5, wherein the limiting (908) step comprises:
limiting (906) a portion of the smoothed out force information (738) within a sensor tolerance error to form sensor tolerance limited force information (740); and
limiting (908) a portion of the sensor tolerance limited force information (740) within a sensor bias error to form the low pass filtered force information (742).

7. The method of claim 6, wherein the step of removing (904) the noise from the force information (626) to form the smoothed out force information (738) comprises:
filtering (904) the force information (626) using a second order filter (710) to remove the noise from the force information (626) to form the smoothed out force information (738).

8. The method of claim 6, wherein the step of limiting (906) the portion of the smoothed out force information (738) within the sensor tolerance error to form the sensor tolerance limited force information (740) comprises:
limiting (906) the smoothed out force information (738) with a limiter (714) to limit the portion of the smoothed out force information (738) within the sensor tolerance error to form the sensor tolerance limited force information (740).

9. The method of claim 6, wherein the step of limiting (908) the portion of the sensor tolerance limited force information (740) within the sensor bias error to form the low pass filtered force information (742) comprises:
filtering (908) the sensor tolerance limited force information (740) using a low pass filter (716) to pass the portion of the sensor tolerance limited force information (740) within the sensor bias error to form the low pass filtered force information (742).

10. The method of claim 1, wherein the force sensor (326) is located on a strain sleeve (321) on the refuelling boom (316).

11. The method of claim 1, wherein the filtered force information (634) is for the forces (333) on the refuelling boom (316) during flight without contact with a receiving aircraft (303).

12. An apparatus comprising:
a control process (339) capable of receiving (800) force information (626) from a force sensor (326) associated with a refuelling boom (316); identifying (802) forces (333) on the refuelling boom (316) without a number of errors of force measurement to form filtered force information (634); generating (804) a force-based command (640) using the filtered force information (634) for the refuelling boom (316)); and controlling, using the force-based command, movement of the refuelling boom to reduce forces described by the force information; and
a computer (338) capable of executing the control process (339), wherein the control process (339) is stored on the computer (338);
wherein generating (916) the force-based command (640) comprises generating the force-based command using the filtered force information (634) for the refuelling boom (316) and a dynamic pressure (638) for an aircraft (100) on which the refuelling boom (316) is located, wherein the force-based command (640) reduces the forces (333) on the refuelling boom (316).

13. The apparatus of claim 12 further comprising:
a sensor system (306) associated with the refuelling boom (316) capable of generating the force information (626), wherein the sensor system (306) comprises:
a force sensor (326); and a strain sleeve (321), wherein the force sensor (326) is located on the strain sleeve (321).

14. The apparatus of claim 12, further comprising:
an actuator system (323), wherein the control process (339) is further capable of combining (920) the force-based command (640) with an operator command (642) to form a command (646) for an actuator system (323) capable of controlling the refuelling boom (316), wherein the actuator system (323) is capable of controlling a force generator system (341).

## Patentansprüche

1. Verfahren zum Verwalten von Kräften (333) auf einem Tankausleger (316), wobei das Verfahren Folgendes umfasst:
Empfangen (800) von Kraftinformationen (626) von einem Kraftsensor (326), der zum Tankausleger (316) gehört;
Identifizieren (802) der Kräfte (333) auf dem Tankausleger (316) ohne eine Anzahl von Kraftmessfehlern, um gefilterte Kraftinformationen (634) zu bilden; und
Generieren (804) eines kraftbasierten Befehls (640) mittels der gefilterten Kraftinformationen (634) für den Tankausleger (316);
Steuern, mittels des kraftbasierten Befehls, der Bewegung des Tankauslegers, um durch die Kraftinformationen beschriebene Kräfte zu verringern,
wobei der Schritt des Generierens (804) Folgendes umfasst:
Generieren (916) des kraftbasierten Befehls (640) mittels der gefilterten Kraftinformationen (634) für den Tankausleger (316) und eines dynamischen Drucks (638) für das Luftfahrzeug (100), an dem sich der Tankausleger (316) befindet, wobei der kraftbasierte Befehl (640) die Kräfte (333) auf dem Tankausleger (316) verringert.

2. Verfahren nach Anspruch 1, des Weiteren umfassend:
Kombinieren (920) des kraftbasierten Befehls (640) mit einem Bedienerbefehl (642), um einen Befehl (646) für ein Betätigungssystem (323) zu bilden, das den Tankausleger (316) steuern kann.

3. Verfahren nach Anspruch 2, wobei das Betätigungssystem (323) ein Kraftgeneratorsystem (341) steuern kann.

4. Verfahren nach Anspruch 1, wobei die Anzahl von Kraftmessfehlern mindestens einer von Rauschen, einem Sensortoleranzfehler und einem Sensorabweichungsfehler ist.

5. Verfahren nach Anspruch 1, wobei der Schritt des Identifizierens (802) Folgendes umfasst:
Einschränken (908) der Kraftinformationen (626), die mit der Anzahl von Kraftmessfehlern zusammenhängen, um tiefpassgefilterte Kraftinformationen (742) zu bilden;
Entfernen (904) von Rauschen aus den Kraftinformationen (626), um die geglätteten Kraftinformationen (738) zu bilden; und
Abziehen (909) der tiefpassgefilterten Kraftinformationen (742) von den geglätteten Kraftinformationen (738), um die gefilterten Kraftinformationen (634) zu bilden.

6. Verfahren nach Anspruch 5, wobei der Schritt des Einschränkens (908) Folgendes umfasst:
Einschränken (906) eines Teils der geglätteten Kraftinformationen (738) innerhalb eines Sensortoleranzfehlers, um durch Sensortoleranz eingeschränkte Kraftinformationen (740) zu bilden; und
Einschränken (908) eines Teils der durch Sensortoleranz eingeschränkten Kraftinformationen (740) innerhalb eines Sensorabweichungsfehlers, um die tiefpassgefilterten Kraftinformationen (742) zu bilden.

7. Verfahren nach Anspruch 6, wobei der Schritt des Entfernens (904) des Rauschens aus den Kraftinformationen (626) zum Bilden der geglätteten Kraftinformationen (738) Folgendes umfasst:
Filtern (904) der Kraftinformationen (626) mittels eines Filters zweiter Ordnung (710) zum Entfernen des Rauschens aus den Kraftinformationen (626), um die geglätteten Kraftinformationen (738) zu bilden.

8. Verfahren nach Anspruch 6, wobei der Schritt des Einschränkens (906) des Teils der geglätteten Kraftinformationen (738) innerhalb des Sensortoleranzfehlers zum Bilden der durch Sensortoleranz eingeschränkten Kraftinformationen (740) Folgendes umfasst:
Einschränken (906) der geglätteten Kraftinformationen (738) mit einer Einschränkvorrichtung (714) zum Einschränken des Teils der geglätteten Kraftinformationen (738) innerhalb des Sensortoleranzfehlers, um die durch Sensortoleranz eingeschränkten Kraftinformationen (740) zu bilden.

9. Verfahren nach Anspruch 6, wobei der Schritt des Einschränkens (908) des Teils der durch Sensortoleranz eingeschränkten Kraftinformationen (740) innerhalb des Sensorabweichungsfehlers zum Bilden der tiefpassgefilterten Kraftinformationen (742) Folgendes umfasst:
Filtern (908) der durch Sensortoleranz eingeschränkten Kraftinformationen (740) mittels eines Tiefpassfilters (716) zum Weitergeben des Teils der durch Sensortoleranz eingeschränkten Kraftinformationen (740) innerhalb des Sensorabweichungsfehlers, um die tiefpassgefilterten Kraftinformationen (742) zu bilden.

10. Verfahren nach Anspruch 1, wobei sich der Kraftsensor (326) auf einer Zugentlastungstülle (321) am Tankausleger (316) befindet.

11. Verfahren nach Anspruch 1, wobei die gefilterten Kraftinformationen (634) die Kräfte (333) auf dem Tankausleger (316) während des Flugs ohne Kontakt mit einem empfangenden Luftfahrzeug (303) betreffen.

12. Vorrichtung, umfassend:
einen Steuerprozess (339), der Folgendes kann: Empfangen (800) von Kraftinformationen (626) von einem Kraftsensor (326), der zu einem Tankausleger (316) gehört; Identifizieren (802) von Kräften (333) auf dem Tankausleger (316) ohne eine Anzahl von Kraftmessfehlern, um gefilterte Kraftinformationen (634) zu bilden; Generieren (804) eines kraftbasierten Befehls (640) mittels der gefilterten Kraftinformationen (634) für den Tankausleger (316); und Steuern, mittels des kraftbasierten Befehls, der Bewegung des Tankauslegers, um durch die Kraftinformationen beschriebene Kräfte zu verringern; und
einen Computer (338), der den Steuerprozess (339) ausführen kann, wobei der Steuerprozess (339) auf dem Computer (338) gespeichert ist,
wobei das Generieren (916) des kraftbasierten Befehls (640) das Generieren des kraftbasierten Befehls mittels der gefilterten Kraftinformationen (634) für den Tankausleger (316) und eines dynamischen Drucks (638) für ein Luftfahrzeug (100) umfasst, an dem sich der Tankausleger (316) befindet, wobei der kraftbasierte Befehl (640) die Kräfte (333) auf dem Tankausleger (316) verringert.

13. Vorrichtung nach Anspruch 12, des Weiteren umfassend:
ein Sensorsystem (306), das zum Tankausleger (316) gehört und die Kraftinformationen (626) generieren kann, wobei das Sensorsystem (306) Folgendes umfasst:
einen Kraftsensor (326) und eine Zugentlastungstülle (321), wobei sich der Kraftsensor (326) auf der Zugentlastungstülle (321) befindet.

14. Vorrichtung nach Anspruch 12, des Weiteren umfassend:
ein Betätigungssystem (323), wobei der Steuerprozess (339) des Weiteren Folgendes kann: Kombinieren (920) des kraftbasierten Befehls (640) mit einem Bedienerbefehl (642), um einen Befehl (646) für ein Betätigungssystem (323) zu bilden, das den Tankausleger (316) steuern kann, wobei das Betätigungssystem (323) ein Kraftgeneratorsystem (341) steuern kann.

## Revendications

1. Procédé pour gérer des forces (333) sur une perche de ravitaillement en vol (316), le procédé comprenant :
la réception (800) des informations de force (626) à partir d'un capteur de force (326) associé à la perche de ravitaillement en vol (316) ;
l'identification (802) des forces (333) sur la perche de ravitaillement en vol (316) sans un nombre d'erreurs de mesure de force pour former des informations de force filtrées (634) ; et
la génération (804) d'une commande à base de force (640) en utilisant les informations de force filtrées (634) pour la perche de ravitaillement en vol (316) ;
la commande, en utilisant la commande à base de force, du mouvement de la perche de ravitaillement en vol pour réduire des forces décrites par les informations de force ;
dans lequel l'étape de la génération (804) comprend :
la génération (916) de la commande à base de force (640) en utilisant les informations de force filtrées (634) pour la perche de ravitaillement en vol (316) et une pression dynamique (638) pour l'aéronef (100) sur lequel la perche de ravitaillement en vol (316) est positionnée, dans lequel la commande à base de force (640) réduit les forces (333) sur la perche de ravitaillement en vol (316).

2. Procédé selon la revendication 1, comprenant en outre :
la combinaison (920) de la commande à base de force (640) avec une commande opérateur (642) pour former une commande (646) pour un système actionneur (323) capable de commander la perche de ravitaillement en vol (316).

3. Procédé selon la revendication 2, dans lequel le système actionneur (323) est capable de commander un système générateur de force (341).

4. Procédé selon la revendication 1, dans lequel le nombre d'erreurs de mesure de force peut être au moins un parmi un bruit, une erreur de tolérance de capteur, et une erreur de sollicitation de capteur.

5. Procédé selon la revendication 1, dans lequel l'étape de l'identification (802) comprend :
la limitation (908) des informations de force (626) associées au nombre d'erreurs de mesure de force pour former des informations de force filtrées passe-bas (742) ;
l'élimination (904) de bruit à partir des informations de force (626) pour former des informations de force lissées (738) ; et
la soustraction (909) des informations de force filtrées passe-bas (742) à partir des informations de force lissées (738) pour former des informations de force filtrées (634).

6. Procédé selon la revendication 5, dans lequel l'étape de la limitation (908) comprend :
la limitation (906) d'une portion des informations de force lissées (738) au sein d'une erreur de tolérance de capteur pour former des informations de force limitées en tolérance de capteur (740) ; et
la limitation (908) d'une portion des informations de force limitées en tolérance de capteur (740) au sein d'une erreur de sollicitation de capteur pour former les informations de force filtrées passe-bas (742).

7. Procédé selon la revendication 6, dans lequel l'étape de l'élimination (904) du bruit à partir des informations de force (626) pour former les informations de force lissées (738) comprend :
le filtrage (904) des informations de force (626) en utilisant un filtre de second ordre (710) pour éliminer le bruit des informations de force (626) pour former les informations de force lissées (738).

8. Procédé selon la revendication 6, dans lequel l'étape de la limitation (906) de la portion des informations de force lissées (738) au sein de l'erreur de tolérance de capteur pour former les informations de force limitées en tolérance de capteur (740) comprend :
la limitation (906) des informations de force lissées (738) avec un limiteur (714) pour limiter la portion des informations de force lissées (738) au sein de l'erreur de tolérance de capteur pour former les informations de force limitées en tolérance de capteur (740).

9. Procédé selon la revendication 6, dans lequel l'étape de la limitation (908) de la portion des informations de force limitées en tolérance de capteur (740) au sein de l'erreur de sollicitation de capteur pour former les informations de force filtrées passe-bas (742) comprend :
le filtrage (908) des informations de force limitées en tolérance de capteur (740) en utilisant un filtre passe-bas (716) pour faire passer la portion des informations de force limitées en tolérance de capteur (740) au sein de l'erreur de sollicitation de capteur pour former les informations de force filtrées passe-bas (742).

10. Procédé selon la revendication 1, dans lequel le capteur de force (326) est positionné sur un manchon filtrant (321) sur la perche de ravitaillement en vol (316).

11. Procédé selon la revendication 1, dans lequel les informations de force filtrées (634) sont pour les forces (333) sur la perche de ravitaillement en vol (316) durant le vol sans contact avec un aéronef de réception (303).

12. Appareil, comprenant :
un processus de commande (339) capable de recevoir (800) des informations de force (626) à partir d'un capteur de force (326) associé à une perche de ravitaillement en vol (316) ; d'identifier (802) des forces (333) sur la perche de ravitaillement en vol (316) sans un nombre d'erreurs de mesure de force pour former des informations de force filtrées (634) ; de générer (804) une commande à base de force (640) en utilisant les informations de force filtrées (634) pour la perche de ravitaillement en vol (316)) ; et de commander, en utilisant la commande à base de force, un mouvement de la perche de ravitaillement en vol pour réduire des forces décrites par les informations de force ; et
un ordinateur (338) capable d'exécuter le processus de commande (339), dans lequel le processus de commande (339) est stocké sur l'ordinateur (338) ;
dans lequel la génération (916) de la commande à base de force (640) comprend la génération de la commande à base de force en utilisant les informations de force filtrées (634) pour la perche de ravitaillement en vol (316) et une pression dynamique (638) pour un aéronef (100) sur lequel la perche de ravitaillement en vol (316) est positionnée, dans lequel la commande à base de force (640) réduit les forces (333) sur la perche de ravitaillement en vol (316).

13. Appareil selon la revendication 12, comprenant en outre :
un système capteur (306) associé à la perche de ravitaillement en vol (316) capable de générer les informations de force (626), dans lequel le système capteur (306) comprend :
un capteur de force (326) ; et un manchon filtrant (321), dans lequel le capteur de force (326) est positionné sur le manchon filtrant (321).

14. Appareil selon la revendication 12, comprenant en outre :
un système actionneur (323), dans lequel le processus de commande (339) est en outre capable de combiner (920) la commande à base de force (640) avec une commande opérateur (642) pour former une commande (646) pour un système actionneur (323) capable de commander la perche de ravitaillement en vol (316), dans lequel le système actionneur (323) est capable de commander un système générateur de force (341).
